# EUROPEAN PATENT SPECIFICATION

(11) **EP 4 367 371 B1**
(45) Date of publication and mention of the grant of the patent: **30.07.2025**
(21) Application number: 22737750.4
(22) Date of filing: 29.06.2022
(51) Int. Cl.: F02C 3/10, F04B 35/01, F04B 35/00, F02C 6/00, F02C 6/04, F17D 1/07, F04B 37/18

(54) **SELF-ENERGIZED COMPRESSION STATION FOR A GAS PIPELINE**
SELBSTGESPEISTE VERDICHTUNGSSTATION FÜR EINE GASLEITUNG
STATION DE COMPRESSION AUTO-ALIMENTÉE POUR UNE CONDUITE DE GAZ

(30) Priority: 07.07.2021 IT 202100017906
(43) Date of publication of application: 15.05.2024
(73) Proprietor: Nuovo Pignone Tecnologie - S.r.l., 50127 Florence (IT)
(72) Inventor: TRINCIA, Francesco, 50127 Florence (IT); CORBO, Simone, 50127 Florence (IT); PUCCI, Egidio, 50127 Florence (IT)
(74) Representative: Novagraaf Group
(86) International application number: PCT/EP2022/025298
(87) International publication number: WO 2023/280434

(56) References cited:
- EP-A1- 2 713 051
- JP-A- 2003 166 428
- US-A1- 2010 212 311
- US-A1- 2016 047 308

## Description

### TECHNICAL FIELD

The subject-matter disclosed herein relates to a gas compression system including at least one reciprocating compressor driven by a gas turbine engine. In particular, the compression system disclosed herein is used to compress the gas transported by a gas pipeline and advantageously is fueled by the gas transported by a gas pipeline.

### BACKGROUND ART

Pipeline systems are used to transport fuels such as natural gas or oil from the extraction point to the point of consumption. This consisting mainly of transportations pipelines and distribution pipelines; transportation pipelines are characterized by long pipes with large diameters, transporting fuel between cities, countries and continents, while distribution pipelines comprise pipes with smaller diameter, delivering fuel from transportations pipelines to points of consumption.

The fuel is moved through the transportation pipelines by compression stations along the pipeline which increase the fuel pressure at the station outlet to overcome frictions and losses along the pipeline. The location of the compression stations and the pressure at the station outlet depend on the type of fuel being transported.

The global trend in recent years is to reduce the fossil fraction of fuels to increase the clean fraction of fuel, such as blending natural gas with hydrogen or the use of hydrogen as fuel, wherein the hydrogen can be produced using renewable energy sources or from fossil hydrocarbons wherein the carbon dioxide produced during the reforming process is captured; in these ways, the release of carbon dioxide during the subsequent combustion can be limited or eliminated. Consequently, nowadays gas pipelines need also to be suitable for transporting pure hydrogen or natural gas blended with hydrogen.

However, pure hydrogen has a density that is about one-eighth that of methane (the hydrogen molecular mass is about 2 and the methane molecular mass is about 16). So, to transport the same energy as natural gas, pure hydrogen requires more than three times the natural gas volumetric flow and approximately five times the compression power.

Typical drivers employed to drive compressors in gas pipeline compressor stations are: electric motor, reciprocating gas engines, gas turbine engines. For location not served with reliable electro-ducts, the electric motor are not a viable option, and the choice remains between reciprocating engines (for the low power range, typically below 5MW) and gas turbine engines (for the high power range, typically above 5MW). US 2016/047308 A1 discloses a load compressor driven by a gas turbine with a rotor shaft extending through the gas turbine and the load compressor. US 2010/ 212311 A1 discloses a thermoacoustic driven compressor. EP 2 713 051 A1 discloses a turbine-driven reciprocating compressor.

The difference in molecular weight results in an achievable pressure ratio per centrifugal compression stage that is much lower for pure hydrogen than the one achievable with natural gas, thus requiring more compression stages of centrifugal compressors. For this reason, in order to reduce the number of compression stations and the number of compression stages per station, it is possible to use a single reciprocating compressor rather than several centrifugal compressors, driven by a gas turbine engine, to compress pure hydrogen or mixtures of natural gas with hydrogen.

This configuration highlights the problem of the transmission of pulsating torque between the reciprocating compressor and the gas turbine engine. In fact, even if multiple cylinder reciprocating compressors are used in boxer configuration, where each pair of opposed cylinders moves inwards and outwards at the same time, not all reciprocating forces are balanced and torque pulsations are transmitted from the reciprocating compressor to the rotary machine, i.e. the gas turbine.

Finally, considering the lower density of pure hydrogen, at same volumetric flow as natural gas, there are less friction and losses transporting hydrogen and consequently longer distance between gas pipeline compression stations could become possible, in combination with higher compressor discharge pressure of hydrogen (normal gauge pressure of 100 bar) than natural gas (normal gauge pressure of 60-80 bar).

### SUMMARY

Therefore, it would be desirable to have gas pipeline compression stations located at very long distance (>300km up and beyond 1000 km), in particular for hydrogen transport in remote location. It would also be desirable to have efficient gas pipeline compression stations from a mechanical and/or emissions points of view. It would further be desirable to have a self-energized gas pipeline compression stations, so that gas transportation is not dependent on external source of energy.

The subject-matter disclosed herein relates to a gas compression system to compress gas transported by a gas pipeline. Gas compression systems are used to recover the pressure loss of the gas pipeline to convey the gas flowing through it to the next gas compression system (or to the end user). The gas compression system disclosed herein compresses the gas by using at least one reciprocating compressor driven by a gas turbine engine advantageously fueled by the same gas transported in the gas pipeline. The gas turbine engine has a high-pressure turbine section and a low-pressure turbine section wherein the low-pressure turbine section is mechanically coupled to the crankshaft of the reciprocating compressor by a mechanical connection such that it minimizes the torque pulsations that the reciprocating machine may transmit to the rotary one, i.e. to the low-pressure turbine section of the gas turbine engine, due to the reciprocating motion. The mechanical connection comprises a gearbox, an elastomeric coupling and a flywheel so that the driver may be well adapted to the load; through the gearbox the rotational speed of the turbine may be adapted to the rotational speed of the reciprocating compressor; through the elastomeric coupling the torque may be transmitted more smoothly considering that the reciprocating compressor offer a non-strictly-constant) torque load; through the flywheel speed oscillations of the reciprocating compressor may be attenuated.

The gas turbine engine has further a combustor section configured to receive the gas transported by the gas pipeline, for example hydrogen, and use it as a fuel, so that the gas compression system may be self-energized by the gas pipeline itself, without the need of an external energy supply. Advantageously, the combustor section is also configured to receive injection of a diluent to reduce reaction zone temperature, and thus reducing thermal NOx formation. More advantageously, the diluent is demineralized water from an external utility source or recovered from air inlet humidity or recovered from the gas turbine exhaust gases.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
- Fig. 1: shows a general schematic diagram of an innovative gas compression system,
- Fig. 2: shows a schematic diagram of a first embodiment of an innovative gas compression system recovering water from inlet air flow humidity and injecting water in the combustor section as diluent, and
- Fig. 3: shows a schematic diagram of a second embodiment of an innovative gas compression system injecting steam in the combustor section as diluent.

### DETAILED DESCRIPTION OF EMBODIMENTS

The subject matter herein disclosed relates to an innovative gas compression system for a gas transported by a gas pipeline that is able to reduce the torque pulsations transmitted between a reciprocating compressor and a gas turbine engine driving the reciprocating compressor. This is achieved by mechanically decoupling a low-pressure turbine section and a high-pressure turbine section of the gas turbine engine but maintaining a fluid coupling between these two sections. Furthermore, the subject matter herein disclosed relates to an innovative gas compression system wherein the gas turbine engine is fueled by gas transported by a gas pipeline.

Reference now will be made in detail to embodiments of the disclosure, examples of which are illustrated in the drawings. Each example is provided by way of explanation of the disclosure, not limitation of the disclosure. In fact, it will be apparent to those skilled in the art that various modifications and variations can be made in the present disclosure without departing from the scope of the disclosure.

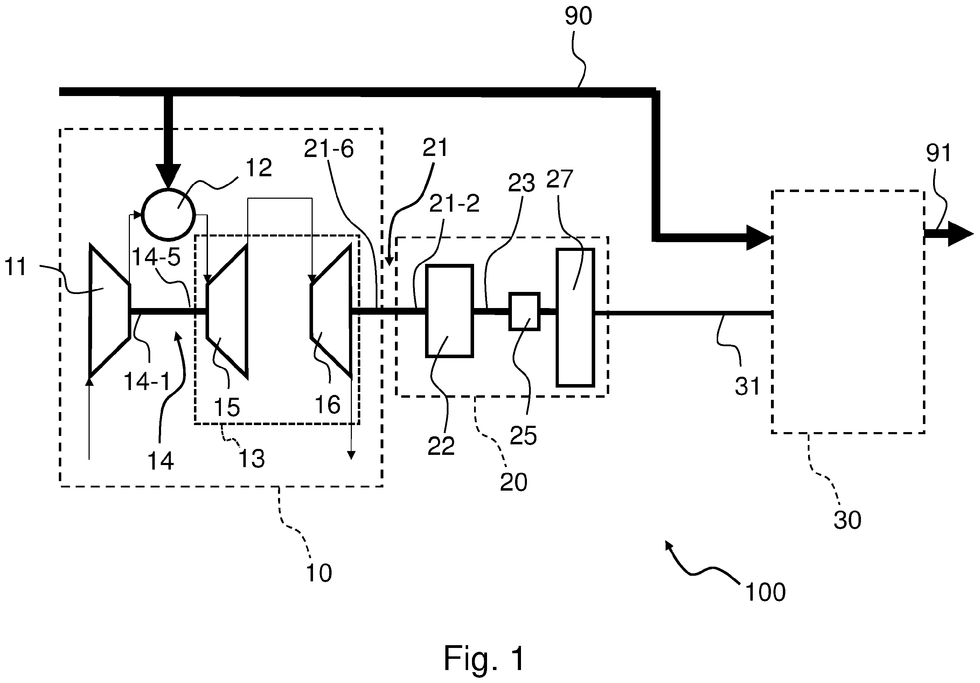

Fig. 1 schematically shows, for example and without limitation, of an innovative gas compression system generally indicated with reference numeral 100.

According to this example, the gas compression system 100 comprises a gas turbine engine 10 and a reciprocating compressor 30 fluidly connected to a gas pipeline 90; advantageously, the gas pipeline 90 may be configured to transport natural gas or hydrogen or natural gas blended with hydrogen.

It is to be noted that the gas transported by the gas pipeline 90 may not be a pure gas, for example pure hydrogen, but it may also contain certain percentages of other components. For example, hydrogen can be part of a mixture that also contains ammonia, or hydrogen may be used to blend natural of gas, resulting in a mixture of hydrocarbons (in particular methane, ethane, propane, and higher hydrocarbons in minor percentage), inert gases (in particular nitrogen and carbon dioxide) and hydrogen. The blend of hydrogen (H2) to natural gas (NG) in volume can vary from 0% H2-100% NG to 100% H2-0% NG, advantageously the blend is 15% H2-85% NG.

The gas turbine engine 10 and the reciprocating compressor 30 are coupled together by a mechanical connection 20. The gas turbine engine 10 coupled to the mechanical connection 20 may transmit a rotational motion to a crankshaft 31 of the reciprocating compressor 30; the crankshaft 31 may performs a conversion of the rotational motion transmitted by the gas turbine engine 10 to the reciprocating motion of the reciprocating compressor 30. In other words, the gas turbine engine 10 may drive the reciprocating compressor 30.

As it will be apparent from the following, the mechanical connection 20 is located between the gas turbine engine and the reciprocating compressor 30 and is designed in such a way as to minimize the mechanical stresses, in particular torque pulsations, which may be transmitted by the reciprocating compressor 30 to the gas turbine engine 10 due to reciprocating motion of reciprocating compressor 30.

According to a specific embodiment, the reciprocating compressor 30 may have four cylinders, in particular two pairs of opposed cylinders, where each pair of opposed cylinders moves inwards and outwards at the same time with respect to a of the crankshaft 31, which is central with respect to each pair of opposed cylinders; this configuration is known as "boxer configuration". It is to be noted that according to other embodiments, the reciprocating compressor may have a different number of cylinders and/or a different configuration.

Advantageously, each cylinder of the reciprocating compressor 30 has a piston connected to the crankshaft 31; each piston is connected to the crankshaft 31 by means of a connecting assembly, typically composed by a connecting rod, a crosshead assembly and a piston rod, which may transmit the motion from the crankshaft 31 to the piston of the cylinder in order to perform a compression of the gas inside the cylinder. Advantageously, the pistons of the reciprocating compressor 30 are each double-acting piston (i.e. the piston compress both in the outward stroke and in the inward stroke with respect to the crankshaft 31).

The big arrow in Fig. 1 departing from gas pipeline 90 indicates that the reciprocating compressor 30 is arranged to be fluidly coupled to the gas pipeline 90. For example, considering Fig.1, the gas transported by the gas pipeline may be supplied to the reciprocating compressor 30, in particular to each cylinder of the reciprocating compressor 30, which performs a compression of the gas in order to increase the gas pressure; in other words, the reciprocating compressor 30 is arranged to receive and process natural gas or hydrogen or natural gas blended with hydrogen from the gas pipeline 90. It is to be noted that the gas from gas pipeline 90 may be split into several streams, each stream being directed to a cylinder of the reciprocating compressor 30. Advantageously, after compression, the gas at the outlet of reciprocating compressor 30, in particular at the outlet of each cylinder of reciprocating compressor 30, is collected and supplied to the next pipe 91 of the gas pipeline 90 which convey the gas to the next compression station of the gas pipeline or to an end user.

The gas turbine engine 10 is the driver of the reciprocating compressor 30, as described above. With non-limiting reference to Fig. 1, the gas turbine engine 10 comprises an axial compressor section 11 that is configured to suck inlet air from the surrounding ambient air and to generate a compressed air flow at an outlet of the axial compressor section 11. Advantageously, air filters are located upstream the axial compressor section to capture smaller contaminants particles or droplets to prevent erosion and/or corrosion and/or fouling of axial compressor section 11 and in general of gas turbine engine 10.

The compression section 11 of gas turbine engine 10 is fluidly coupled to a combustor section 12, located downstream the compressor section 11; in particular, the combustor section 12 is configured to receive the compressed air flow from the outlet of the axial compressor section 11.

Advantageously, the combustor section 12 is further configured to receive the gas transported by the gas pipeline 90 and use it as a fuel, so that the gas turbine engine 10 does not require an external source of energy; in other words, the combustor section 12 is further configured to receive and process natural gas or hydrogen or natural gas blended with hydrogen from the gas pipeline 90. It is to be noted that the gas received may be injected directly in a combustion chamber of combustor section 12 (this is a type of combustion known as "diffusion flame") or may be pre-mixed with the compressed air flow in an area of combustor section 12 not yet affected by the flame (this is a type of combustion known as "premixed flame"), depending on the gas received. For example, hydrogen is extremely reactive during combustion, so the simplest technological solution may be to have a diffusion flame instead of a premixed flame depending on the percentage of hydrogen contained in the gas transported by gas pipeline 90. However, the diffusion flame generates higher reaction temperatures with respect to premixed flame and therefore a greater formation of NOx. Hence, the reduction of emission, in particular of NOx, becomes of great importance and can be carried out as explained below.

The combustor section 12 of the gas turbine engine 10 is fluidly coupled to a turbine section 13 located downstream the combustor section 12; in particular, the turbine section 13 is configured to receive burned gases from the combustor section 12, as shown in Fig. 1 by the thin arrow which connects the combustor section 12 and the turbine section 13, and perform a first expansion of gases.

The turbine section 13 comprises a high-pressure turbine section 15 and a low-pressure turbine section 16 located downstream the high-pressure turbine section 15. The high-pressure turbine section 15 is fluidly coupled to the combustor section 12 and has a shaft 14-5 mechanically coupled to a shaft 14-1 of the axial compressor section 11; in other words, the shaft 14 has two ends, a first end 14-1 is connected to the axial compressor section 11 and a second end 14-5 is connected to the high-pressure turbine section 15, so that the high-pressure turbine section 15 may drive the axial compressor section 11.

As shown in Fig. 1 by the thin arrow which connects the high-pressure turbine section 15 and the low-pressure turbine section 16, the high-pressure turbine section 15 is fluidly coupled to the low-pressure turbine section 16; in particular, the low-pressure turbine section 16 is configured to receive exhaust gases from the high-pressure turbine section 15 and perform a second expansion.

The low-pressure turbine section 16 has a shaft 21which has a first end 21-6 connected to the low-pressure turbine section 16. The shaft 21 is mechanically coupled to the crankshaft 31 of reciprocating compressor 30; in particular, the low-pressure turbine section 16 may drive the crankshaft 31. It is to be noted that the shaft 21-6 of the low-pressure turbine section 16 is mechanically decoupled from the shaft 14-5 of the high-pressure turbine section 15 (while they are fluidly coupled), so that only the low-pressure turbine section 16 of gas turbine engine 10 is mechanically coupled to the reciprocating compressor 30 (in particular, only to the reciprocating compressor through other components, e.g. a gearbox and an elastomeric coupling and a flywheel); therefore, the low-pressure turbine section 16 may be considered a so-called "free turbine"; advantageously, mechanical torques and motions are only transmitted between the low-pressure turbine section 16 and the reciprocating compressor 30, in particular by the shaft 21 and the crankshaft 31.

It is to be noted that the high-pressure turbine section 15 and the low-pressure turbine section 16 may operate at different rotational speed and that these speeds can vary relative to each other. Advantageously, sliding is possible between the shaft 14 and the shaft 21, even for long times (minutes).

With non-limiting reference to Fig. 1, the gas compression system 100 comprises a mechanical connection 20 that is mechanically coupled between the low-pressure turbine section 16 and the reciprocating compressor 30. Advantageously, the mechanical connection 20 is arranged to transmit a rotation motion from the low-pressure turbine section 16 to the reciprocating compressor 30, in particular to the crankshaft of the reciprocating compressor 30. Advantageously, the mechanical connection 20 is also arranged to dampen and/or minimize the torque pulsations that the reciprocating compressor 30 may transmits to the low-pressure turbine section 16, due to the reciprocating motion.

In particular, the mechanical connection 20 comprises a gearbox 22; advantageously, the gearbox 22 has a first shaft 21-2 on a first side and a second shaft 23 on the opposite side to the first side. As shown in Fig. 1, the first shaft 21-2 is mechanically coupled to the shaft 21-6 of the low-pressure turbine section 16 and the second shaft 23 is mechanically coupled to the crankshaft 31 of the reciprocating compressor 30; in other words, the shaft 21 has a first end connected to the low-pressure turbine section 16 and a second end connected to the gearbox 22.

The gearbox 22 may be configured to reduce rotational speed of the shaft 21 of low-pressure turbine stage 16 to the low speed requested by the crankshaft 31. Typically, the speed requested by the crankshaft may be less than 500 rpm (rpm=revolutions per minute) and the rotational speed of the low-pressure turbine stage 16 may be in the order of 8000 rpm. Advantageously, the gearbox 22 reduces the rotary speed of the shaft 21 by at least a 10: 1 ratio, preferably by a 21:1 ratio. For example, the rotary speed of the shaft 21 may be 7800 rpm and the rotary speed of the shaft 23 may be 370 rpm. Advantageously, the gearbox 22 is an epicyclic gearbox. More advantageously, the gearbox 22 is an epicyclic gearbox with double step of speed-reduction. Advantageously, the gearbox 22 may reduce the rotary speed of the shaft 21 by a 6:1 ratio, using an intermediate shaft, and then reduce the rotary speed of the intermediate shaft by a 3.5:1 ratio, corresponding to the rotary speed of the shaft 23. For example, the rotary speed of the shaft 21 may be 7800 rpm, the rotary speed of the intermediate shaft may be 1300 rpm and the rotary speed of the shaft 23 may be 370 rpm.

In particular, the mechanical connection 20 comprises further an elastomeric coupling 25; advantageously, the elastomeric coupling 25 has two connecting elements: a first element that is connected to the second shaft 23 of the gearbox 22 and a second element that is connected to the crankshaft 31; advantageously, the elastomeric coupling 25 has an elastomeric damper located between the first element and the second element, in order to isolate the torque pulsations on the reciprocating compressor 30 side only. It is to be noted that the connecting elements of the elastomeric coupling 25 may be for example metal hubs or flanges.

In particular, the mechanical connection 20 comprises further a flywheel 27; advantageously, the flywheel 27 is located between the elastomeric coupling 25 and the crankshaft 31; advantageously, the flywheel 27 is configured to attenuate speed oscillations of the reciprocating compressor 30. In particular, the flywheel 27 is a balanced flywheel optimized to harmonize the rotational effects transmitted between the gas turbine engine 20 and the reciprocating compressor 30.

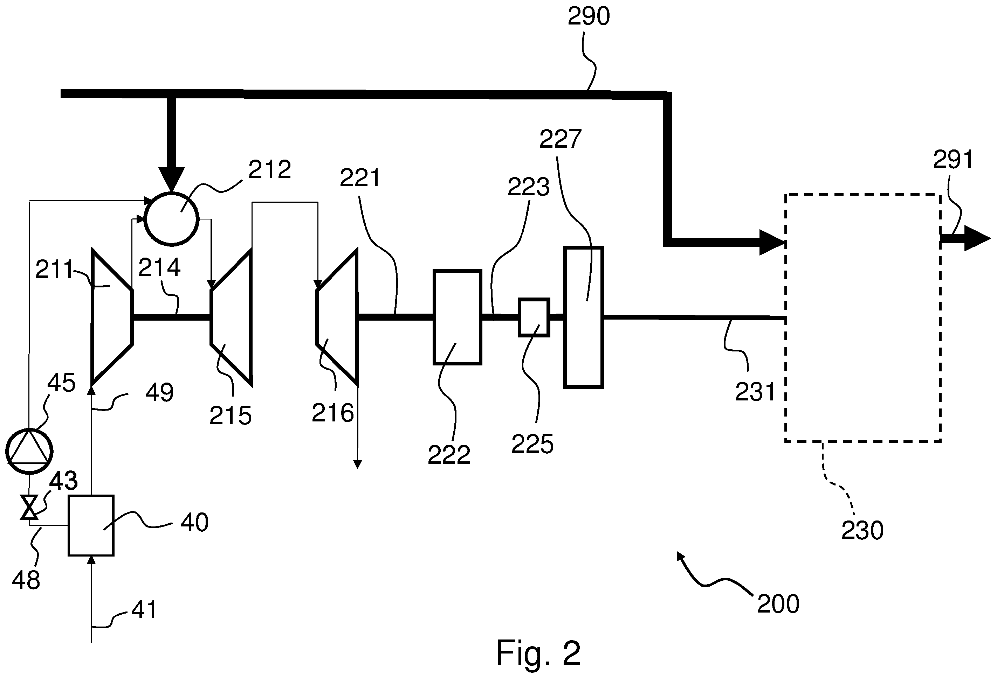

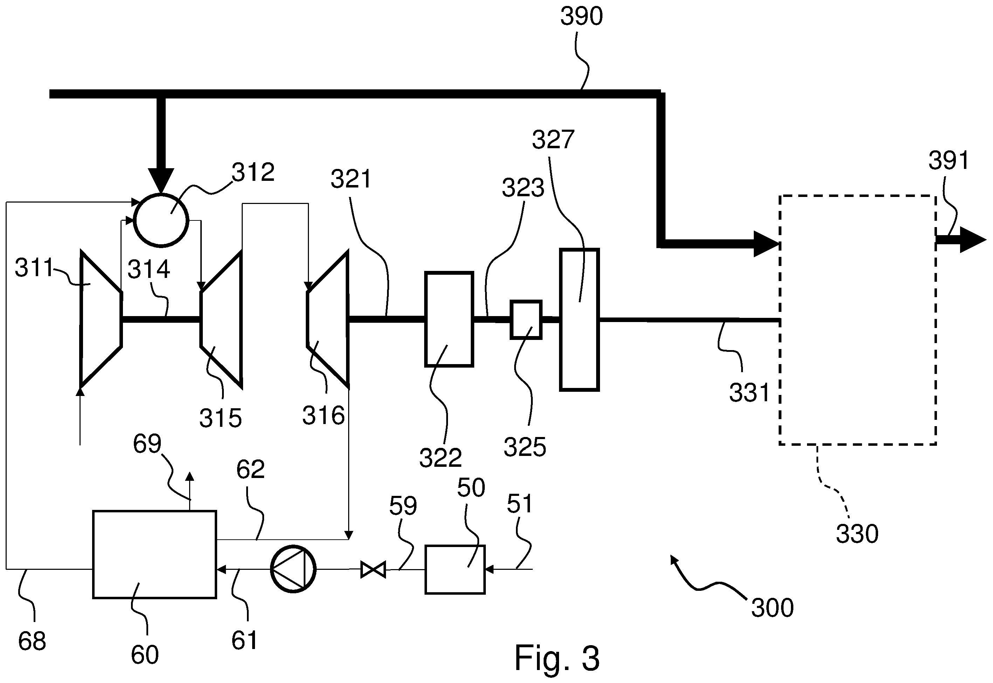

Fig. 2 and Fig. 3 refer respectively to a first embodiment 200 and a second embodiment 300 of a gas compression system. Advantageously, the combustor section 212, 312 of the gas compression system 200, 300 is configured to receive a diluent to perform low NOx combustion. It is to be noted that NOx gases are a well-known product of combustion, usually produced from the reaction among nitrogen and oxygen during combustion of fuels in air. It is also to be noted that in some countries NOx gases production is restricted, for example by NOx emission limits established by each country.

Typically, NOx gases are produced especially at high temperatures. Advantageously, the injection of a diluent in the combustor section 212, 312 of the gas compression system 200, 300 lowers the adiabatic flame temperature and influences the formation mechanism of NOx, limiting NOx gases production. It is to be noted that the diluent may be injected directly in the combustor section 212, 312, in particular in the combustion chamber of combustor section 212, 312, or alternatively may be first mixed with the compressed air flow received from the axial compressor section 211,311 or with the gas transported by the gas pipeline 290,30 that is used as fuel.

Advantageously, the diluent is water, in particular demineralized water. Advantageously, the water is recovered from the gas compression system. Additionally or alternatively, the water is supplied from an external source, for example a reverse osmosis system which may perform a water purification process to obtain demineralized water.

A first embodiment 200 of a gas compression system will be described in the following with the aid of Fig. 2. It is to be noted that elements 211, 212, 214, 215, 216, 221, 222, 223, 225, 227, 230, 231, 290 and 291 in Fig. 2 may be identical or similar respectively to elements 11 (axial compressor section), 12 (combustor section), 14 (shaft), 15 (high-pressure turbine section), 16 (low-pressure turbine section), 21 (shaft), 22 (gearbox), 23 (shaft), 27 (flywheel), 25 (elastomeric coupling), 30 (reciprocating compressor), 31 (crankshaft), 90 (gas pipeline) and 91 (next pipe of the gas pipeline) in Fig. 1 and perform the same or similar functions.

The gas compression system 200 of Fig. 2 comprises a chilling system 40 arranged to recover demineralized water from humidity of inlet air flow. Advantageously, the chilling system 40 is located upstream the axial compressor section 211. Advantageously, the chilling system 40 is located between air filters and the axial compressor section 211.

Typically, in a chilling system, an inlet air flow passes through chilled coils, the air is cooled through indirect heat exchange with a cooling fluid and air humidity condensate on chilled coils when air is cooled below the wet bulb temperature. With non-limiting reference to Fig. 2, the chilling system 40 has an inlet 41 arranged to receive an inlet air flow, in particular an inlet air flow sucked by the axial compressor section 211 from the surrounding ambient air; advantageously, the inlet air flow is filtered before entering the chilling system 40.

Advantageously, the chilling system 40 has at least two outlets: a first outlet 48 is fluidly coupled to the combustor section 212 and a second outlet 49 is fluidly coupled to the axial compression section 211. Through the first outlet 48 the chilling system 40 may inject demineralized water in the combustor section 212; advantageously, demineralized water is recovered from condensation of inlet air humidity; advantageously, the demineralized water flow is regulated by at least a valve 43 and a pump 45. Through the second outlet 49 the chilling system 40 may supply cooled inlet air flow to the axial compressor section 211.

Alternative or additionally, the gas compression system 200 comprises further a condensate separator arranged to recover demineralized water from humidity of exhaust gases flow.

Advantageously, the condensate separator has at least an inlet fluidly coupled to the low-pressure turbine stage 216 and is arranged to receive an inlet exhaust gases flow from the low-pressure turbine stage 216; advantageously, the condensate separator has at least an outlet fluidly coupled to the combustor section 212 in order to inject demineralized water in the combustor section 212; advantageously, the demineralized water flow is regulated by at least a valve and a pump.

Alternative or additionally, with non-limiting reference to Fig. 3, the gas compression system 300 comprises further a reverse osmosis system 50 arranged to perform a water purification process to obtain demineralized water. Typically, a reverse osmosis system 50 has an inlet 51 arranged to receive a water flow and pushes it through a semi-permeable membrane. Advantageously, the reverse osmosis system 50 has an outlet 59 fluidly coupled to the combustor section 312, in order to inject demineralized water in the combustor section 312.

It is to be noted that demineralized water may be injected in the combustor section in the form of steam.

A second embodiment 300 of a gas compression system will be described in the following with the aid of Fig. 3. It is to be noted that elements 311, 312, 314, 315, 316, 321, 322, 323, 325, 327, 331 and 290 in Fig. 3 may be identical or similar respectively to elements 11 (axial compressor section), 12 (combustor section), 14 (shaft), 15 (high-pressure turbine section), 16 (low-pressure turbine section), 21 (shaft), 22 (gearbox), 23 (shaft), 27 (flywheel), 25 (elastomeric coupling), 30 (reciprocating compressor), 31 (crankshaft), 90 (gas pipeline) and 91 (next pipe of the gas pipeline) in Fig. 1 and perform the same or similar functions.

The gas compression system 300 of Fig. 3 comprises further a steam generator 60 arranged to provide heat to the demineralized water. Advantageously, the steam generator is located upstream the combustor section 312; in particular, the steam generator 60 has an outlet 68 fluidly coupled to the combustor section 312, the outlet 68 being arranged to supply steam to the combustor section 312.

Advantageously, the steam generator 60 has a first inlet 61 fluidly coupled to at least a demineralized water source, for example a chilling system 40 or a reverse osmosis group 50.

Advantageously, the steam generator 60 has a second inlet 62 fluidly coupled to the low-pressure turbine stage 316, in particular to the low-pressure turbine stage outlet where typically exhaust gases are discharged in the surrounding ambient. It is to be noted that exhaust gases may have residual thermal capacity that can be exploited.

Advantageously, the steam generator 60 exploits heat from exhaust gases of the low-pressure turbine stage 316 and is arranged to provide heat to the demineralized water to generate steam. Steam generator 60 may have a second outlet 69 where cold exhaust gases are finally discharged in the surrounding ambient.

It is finally to be noted that any combination of chilling system 40 and/or reverse osmosis group 50 to obtain demineralized water and steam generator 60 to obtain steam may be used.

## Claims

1. A gas compression system (100) for compressing gas transported by a gas pipeline (90),
wherein the gas compression system (100) comprises a gas turbine engine (10) and a reciprocating compressor (30),
wherein the gas turbine engine (10) comprises an axial compressor section (11), a combustor section (12), and a turbine section (13),
wherein the turbine section (13) comprises a high-pressure turbine section (15) and a low-pressure turbine section (16) located downstream the high-pressure turbine section (15), wherein the low-pressure turbine section (16) is fluidly coupled to the high-pressure turbine section (15),
wherein the high-pressure turbine section (15) has a shaft (14-5),
wherein the low-pressure turbine section (16) has a shaft (21-6) mechanically coupled through a mechanical connection (20) to a crankshaft (31) of the reciprocating compressor (30) so to transmit a rotation motion from the low-pressure turbine section (16) to the reciprocating compressor (30),
wherein the mechanical connection (20) comprises a gearbox (22),
wherein the shaft (21-6) of the low-pressure turbine section (16) is mechanically decoupled from the shaft (14-5) of the-high-pressure turbine section (15) whereby the low-pressure turbine section (16) operates as a free turbine,
the gas compression system (100) being **characterised in that** the mechanical connection (20) further comprises an elastomeric coupling (25) and a flywheel (27).

2. The gas compression system (100) of claim 1, wherein the combustor section (12) is configured to receive a compressed air flow from the axial compressor section (11) and to receive the gas transported by the gas pipeline (90) and use it as a fuel.

3. The gas compression system (100) of claim 2, wherein the combustor section (12) and the reciprocating compressor (30) are configured to receive and process natural gas or hydrogen or natural gas blended with hydrogen from the gas pipeline (90).

4. The gas compression system (100) of claim 1, wherein the gearbox (22) has a first shaft (21-2) and a second shaft (23),
wherein the first shaft (21-2) is mechanically coupled to the shaft (21-6) of the low-pressure turbine section (16),
wherein the second shaft (23) is mechanically coupled to the crankshaft (31) of the reciprocating compressor (30),
wherein the gearbox (22) is configured to reduce rotational speed of the shaft (21-6) of low-pressure turbine stage (16) to a low speed requested by crankshaft (31).

5. The gas compression system (100) of claim 1, wherein the gearbox (22) is an epicyclic gearbox.

6. The gas compression system (100) of claim 4, wherein the gearbox (22) is arranged to reduce the rotational speed of the shaft (21-6) by at least a 10:1 ratio.

7. The gas compression system (100) of claim 4, wherein the elastomeric coupling (25) has a first and a second connection elements,
wherein the first connection element is coupled to the second shaft (23) of the gearbox (22) and the second connection element is coupled to the crankshaft (31),
wherein preferably an elastomeric damper is located between the first connection element and the second connection element.

8. The gas compression system (100) of claim 1,
wherein the flywheel (27) is located between the elastomeric coupling (25) and the crankshaft (31),
wherein the flywheel (27) is configured to attenuate speed oscillations of the reciprocating compressor (30).

9. The gas compression system (200, 300) of claim 1, wherein the combustor section (212, 312) is configured to receive a diluent to perform low NOx combustion.

10. The gas compression system (200) of claim 9, wherein the diluent is demineralized water.

11. The gas compression system (200) of claim 10, comprising further a chilling system (40),
wherein the chilling system (40) has an inlet (41) configured to receive an inlet air flow,
wherein the chilling system (40) has a first outlet (48) fluidly coupled to the combustor section (212),
wherein the chilling system has second outlet (49) fluidly coupled to the axial compression section (211),
wherein the chilling system (40) is configured to recover demineralized water from humidity of the inlet air flow.

12. The gas compression system (200) of claim 10, comprising further a reverse osmosis system (50),
wherein the reverse osmosis system (50) has an inlet (51) configured to receive a water flow,
wherein the reverse osmosis system (50) has an outlet (59) fluidly coupled to the combustor section (212),
wherein the reverse osmosis system (50) is configured to perform a water purification process to obtain demineralized water.

13. The gas compression system (300) of claim 10, wherein the combustor section (312) is configured to receive demineralized water in the form of steam.

14. The gas compression system (300) of claim 10, comprising further a steam generator (60),
wherein the steam generator is located upstream the combustor section (312), wherein the steam generator (60) has a first inlet (61) fluidly coupled to at least a demineralized water source (40,50),
wherein the steam generator (60) has a second inlet (62) fluidly coupled to the low-pressure turbine stage (316),
wherein the steam generator (60) has an outlet (68) fluidly coupled to the combustor section (312), the outlet (68) being configured to supply steam to the combustor section (312),
wherein the steam generator (60) is configured to provide heat to the demineralized water to generate steam, the heat being recovered from exhaust gases of the low-pressure turbine stage (316).

## Patentansprüche

1. Gaskompressionssystem (100) zum Komprimieren von Gas, das durch eine Gaspipeline (90) transportiert wird,
wobei das Gaskompressionssystem (100) ein Gasturbinentriebwerk (10) und einen Hubkolbenkompressor (30) umfasst,
wobei das Gasturbinentriebwerk (10) einen axialen Kompressorabschnitt (11), einen Brennkammerabschnitt (12) und einen Turbinenabschnitt (13) umfasst,
wobei der Turbinenabschnitt (13) einen Hochdruckturbinenabschnitt (15) und einen Niederdruckturbinenabschnitt (16), der sich stromabwärts des Hochdruckturbinenabschnitts (15) befindet, umfasst, wobei der Niederdruckturbinenabschnitt (16) mit dem Hochdruckturbinenabschnitt (15) fluidisch gekoppelt ist,
wobei der Hochdruckturbinenabschnitt (15) eine Welle (14-5) aufweist, wobei der Niederdruckturbinenabschnitt (16) eine Welle (21-6) aufweist, die über eine mechanische Verbindung (20) mit einer Kurbelwelle (31) des Hubkolbenkompressors (30) mechanisch gekoppelt ist, um eine Drehbewegung von dem Niederdruckturbinenabschnitt (16) auf den Hubkolbenkompressor (30) zu übertragen,
wobei die mechanische Verbindung (20) ein Getriebe (22) umfasst,
wobei die Welle (21-6) des Niederdruckturbinenabschnitts (16) von der Welle (14-5) des Hochdruckturbinenabschnitts (15) mechanisch entkoppelt ist, wodurch der Niederdruckturbinenabschnitt (16) als eine freie Turbine in Betrieb ist, wobei das Gaskompressionssystem (100) **dadurch gekennzeichnet ist, dass** die mechanische Verbindung (20) ferner eine Elastomerkupplung (25) und ein Schwungrad (27) umfasst.

2. Gaskompressionssystem (100) nach Anspruch 1, wobei der Brennkammerabschnitt (12) konfiguriert ist, um einen komprimierten Luftdurchfluss von dem axialen Kompressorabschnitt (11) aufzunehmen und um das Gas, das durch die Gaspipeline (90) transportiert wird, aufzunehmen und als einen Kraftstoff zu verwenden.

3. Gaskompressionssystem (100) nach Anspruch 2, wobei der Brennkammerabschnitt (12) und der Hubkolbenkompressor (30) konfiguriert sind, um Erdgas oder Wasserstoff oder Erdgas, das mit Wasserstoff vermischt ist, von der Gaspipeline (90) aufzunehmen und zu verarbeiten.

4. Gaskompressionssystem (100) nach Anspruch 1, wobei das Getriebe (22) eine erste Welle (21-2) und eine zweite Welle (23) aufweist,
wobei die erste Welle (21-2) mit der Welle (21-6) des Niederdruckturbinenabschnitts (16) mechanisch gekoppelt ist,
wobei die zweite Welle (23) mit der Kurbelwelle (31) des Hubkolbenkompressors (30) mechanisch gekoppelt ist,
wobei das Getriebe (22) konfiguriert ist, um eine Drehgeschwindigkeit der Welle (21-6) der Niederdruckturbinenstufe (16) auf eine niedrige Geschwindigkeit, die durch die Kurbelwelle (31) angefordert wird, zu reduzieren.

5. Gaskompressionssystem (100) nach Anspruch 1, wobei das Getriebe (22) ein Planetengetriebe ist.

6. Gaskompressionssystem (100) nach Anspruch 4, wobei das Getriebe (22) angeordnet ist, um die Drehgeschwindigkeit der Welle (21-6) in mindestens einem Verhältnis von 10 : 1 zu reduzieren.

7. Gaskompressionssystem (100) nach Anspruch 4, wobei die Elastomerkupplung (25) ein erstes und ein zweites Verbindungselement aufweist,
wobei das erste Verbindungselement mit der zweiten Welle (23) des Getriebes (22) gekoppelt ist und das zweite Verbindungselement mit der Kurbelwelle (31) gekoppelt ist,
wobei sich vorzugsweise ein Elastomerdämpfer zwischen dem ersten Verbindungselement und dem zweiten Verbindungselement befindet.

8. Gaskompressionssystem (100) nach Anspruch 1,
wobei sich das Schwungrad (27) zwischen der Elastomerkupplung (25) und der Kurbelwelle (31) befindet,
wobei das Schwungrad (27) konfiguriert ist, um Geschwindigkeitsschwankungen des Hubkolbenkompressors (30) abzuschwächen.

9. Gaskompressionssystem (200, 300) nach Anspruch 1, wobei der Brennkammerabschnitt (212, 312) konfiguriert ist, um ein Verdünnungsmittel aufzunehmen, um eine NOx-arme Verbrennung durchzuführen.

10. Gaskompressionssystem (200) nach Anspruch 9, wobei das Verdünnungsmittel demineralisiertes Wasser ist.

11. Gaskompressionssystem (200) nach Anspruch 10, ferner umfassend ein Kühlsystem (40),
wobei das Kühlsystem (40) einen Einlass (41) aufweist, der konfiguriert ist, um einen Einlassluftdurchfluss aufzunehmen,
wobei das Kühlsystem (40) einen ersten Auslass (48) aufweist, der mit dem Brennkammerabschnitt (212) fluidisch gekoppelt ist,
wobei das Kühlsystem einen zweiten Auslass (49) aufweist, der mit dem axialen Kompressionsabschnitt (211) fluidisch gekoppelt ist,
wobei das Kühlsystem (40) konfiguriert ist, um demineralisiertes Wasser aus einer Feuchte des Einlassluftdurchflusses zurückzugewinnen.

12. Gaskompressionssystem (200) nach Anspruch 10, ferner umfassend ein Umkehrosmosesystem (50),
wobei das Umkehrosmosesystem (50) einen Einlass (51) aufweist, der konfiguriert ist, um einen Wasserdurchfluss aufzunehmen,
wobei das Umkehrosmosesystem (50) einen Auslass (59) aufweist, der mit dem Brennkammerabschnitt (212) fluidisch gekoppelt ist,
wobei das Umkehrosmosesystem (50) konfiguriert ist, um ein Wasserreinigungsverfahren durchzuführen, um demineralisiertes Wasser zu erhalten.

13. Gaskompressionssystem (300) nach Anspruch 10, wobei der Brennkammerabschnitt (312) konfiguriert ist, um demineralisiertes Wasser in der Form von Dampf aufzunehmen.

14. Gaskompressionssystem (300) nach Anspruch 10, ferner umfassend einen Dampferzeuger (60),
wobei sich der Dampferzeuger stromaufwärts des Brennkammerabschnitts (312) befindet,
wobei der Dampferzeuger (60) einen ersten Einlass (61) aufweist, der mit mindestens einer Quelle (40,50) von demineralisiertem Wasser fluidisch gekoppelt ist,
wobei der Dampferzeuger (60) einen zweiten Einlass (62) aufweist, der mit der Niederdruckturbinenstufe (316) fluidisch gekoppelt ist,
wobei der Dampferzeuger (60) einen Auslass (68) aufweist, der mit dem Brennkammerabschnitt (312) fluidisch gekoppelt ist, wobei der Auslass (68) konfiguriert ist, um dem Brennkammerabschnitt (312) Dampf zuzuführen,
wobei der Dampferzeuger (60) konfiguriert ist, um dem demineralisiertem Wasser Wärme bereitzustellen, um Dampf zu erzeugen, wobei die Wärme aus Abgasen der Niederdruckturbinenstufe (316) zurückgewonnen wird.

## Revendications

1. Système de compression de gaz (100) destiné à comprimer un gaz transporté par une conduite de gaz (90),
dans lequel le système de compression de gaz (100) comprend un moteur à turbine à gaz (10) et un compresseur alternatif (30),
dans lequel le moteur à turbine à gaz (10) comprend une section de compression axiale (11), une section de chambre de combustion (12) et une section de turbine (13),
dans lequel la section de turbine (13) comprend une section de turbine haute pression (15) et une section de turbine basse pression (16) située en aval de la section de turbine haute pression (15), dans lequel la section de turbine basse pression (16) est accouplée fluidiquement à la section de turbine haute pression (15),
dans lequel la section de turbine haute pression (15) a un arbre (14-5),
dans lequel la section de turbine basse pression (16) a un arbre (21-6) accouplé mécaniquement à travers une liaison mécanique (20) à un vilebrequin (31) du compresseur alternatif (30) afin de transmettre un mouvement de rotation provenant de la section de turbine basse pression (16) au compresseur alternatif (30),
dans lequel la liaison mécanique (20) comprend une boîte de vitesse (22),
dans lequel l'arbre (21-6) de la section de turbine basse pression (16) est mécaniquement désaccouplé de l'arbre (14-5) de la section de turbine haute pression (15), moyennant quoi la section de turbine basse pression (16) fonctionne comme une turbine libre,
le système de compression de gaz (100) étant **caractérisé en ce que** la liaison mécanique (20) comprend en outre un accouplement élastomère (25) et un volant d'inertie (27).

2. Système de compression de gaz (100) selon la revendication 1, dans lequel la section de chambre de combustion (12) est conçue pour recevoir un flux d'air comprimé provenant de la section de compression axiale (11) et pour recevoir le gaz transporté par la conduite de gaz (90) et l'utiliser comme combustible.

3. Système de compression de gaz (100) selon la revendication 2, dans lequel la section de chambre de combustion (12) et le compresseur alternatif (30) sont conçus pour recevoir et traiter un gaz naturel ou de l'hydrogène ou un gaz naturel mélangé à de l'hydrogène provenant de la conduite de gaz (90).

4. Système de compression de gaz (100) selon la revendication 1, dans lequel la boîte de vitesses (22) a un premier arbre (21-2) et un second arbre (23),
dans lequel le premier arbre (21-2) est mécaniquement accouplé à l'arbre (21-6) de la section de turbine basse pression (16),
dans lequel le second arbre (23) est mécaniquement accouplé au vilebrequin (31) du compresseur alternatif (30),
dans lequel la boîte de vitesses (22) est conçue pour réduire la vitesse de rotation de l'arbre (21-6) de l'étage de turbine basse pression (16) à une faible vitesse requise par le vilebrequin (31).

5. Système de compression de gaz (100) selon la revendication 1, dans lequel la boîte de vitesses (22) est une boîte de vitesses épicycloïdale.

6. Système de compression de gaz (100) selon la revendication 4, dans lequel la boîte de vitesses (22) est agencée pour réduire la vitesse de rotation de l'arbre (21-6) dans un rapport d'au moins 10:1.

7. Système de compression de gaz (100) selon la revendication 4, dans lequel l'accouplement élastomère (25) a un premier et un second élément de liaison,
le premier élément de liaison est accouplé au second arbre (23) de la boîte de vitesses (22) et le second élément de liaison est accouplé au vilebrequin (31),
dans lequel, de préférence, un amortisseur élastomère est situé entre le premier élément de liaison et le second élément de liaison.

8. Système de compression de gaz (100) selon la revendication 1,
dans lequel le volant d'inertie (27) est situé entre l'accouplement élastomère (25) et le vilebrequin (31),
dans lequel le volant d'inertie (27) est conçu pour atténuer les oscillations de vitesse du compresseur alternatif (30).

9. Système de compression de gaz (200, 300) selon la revendication 1, dans lequel la section de chambre de combustion (212, 312) est conçue pour recevoir un diluant afin d'effectuer une combustion à faibles émissions de NOx.

10. Système de compression de gaz (200) selon la revendication 9, dans lequel le diluant est de l'eau déminéralisée.

11. Système de compression de gaz (200) selon la revendication 10, comprenant en outre un système de refroidissement (40),
dans lequel le système de refroidissement (40) a une entrée (41) conçue pour recevoir un flux d'air d'entrée,
dans lequel le système de refroidissement (40) a une première sortie (48) accouplée fluidiquement à la section de chambre de combustion (212),
dans lequel le système de refroidissement a une seconde sortie (49) accouplée fluidiquement à la section de compression axiale (211),
dans lequel le système de refroidissement (40) est conçu pour récupérer l'eau déminéralisée à partir de l'humidité du flux d'air d'entrée.

12. Système de compression de gaz (200) selon la revendication 10, comprenant en outre un système d'osmose inverse (50),
dans lequel le système d'osmose inverse (50) a une entrée (51) conçue pour recevoir un flux d'eau,
dans lequel le système d'osmose inverse (50) a une sortie (59) accouplée fluidiquement à la section de chambre de combustion (212),
dans lequel le système d'osmose inverse (50) est conçu pour effectuer un processus de purification de l'eau afin d'obtenir de l'eau déminéralisée.

13. Système de compression de gaz (300) selon la revendication 10, dans lequel la section de chambre de combustion (312) est conçue pour recevoir de l'eau déminéralisée sous forme de vapeur.

14. Système de compression de gaz (300) selon la revendication 10, comprenant en outre un générateur de vapeur (60),
dans lequel le générateur de vapeur est situé en amont de la section de chambre de combustion (312),
dans lequel le générateur de vapeur (60) a une première entrée (61) accouplée fluidiquement à au moins une source d'eau déminéralisée (40,50),
dans lequel le générateur de vapeur (60) a une seconde entrée (62) accouplée fluidiquement à l'étage de turbine basse pression (316),
dans lequel le générateur de vapeur (60) a une sortie (68) accouplée fluidiquement à la section de chambre de combustion (312), la sortie (68) étant conçue pour fournir de la vapeur à la section de chambre de combustion (312),
dans lequel le générateur de vapeur (60) est conçu pour fournir de la chaleur à l'eau déminéralisée afin de générer de la vapeur, la chaleur étant récupérée à partir des gaz d'échappement de l'étage de turbine basse pression (316).
